# Europäisches Patentamt

**European Patent Office**

**Office européen des brevets**

(19)

(11) Publication number: **0 014 275 B1**

(12) **EUROPEAN PATENT SPECIFICATION**

(45) Date of publication of patent specification: **20.07.83**

(51) Int. Cl.³: **F 16 C 29/06**

(21) Application number: **79200805.4**

(22) Date of filing: **24.12.79**

(54) Ball bearing for linear motion.

(30) Priority: **15.01.79 NL 7900300**

(43) Date of publication of application:
**20.08.80 Bulletin 80/17**

(45) Publication of the grant of the patent:
**20.07.83 Bulletin 83/29**

(84) Designated Contracting States:
**DE FR GB IT NL SE**

(56) References cited:
**CH - A - 408 548**
**FR - A - 2 039 840**
**FR - A - 2 205 137**
**FR - A - 2 236 390**
**FR - A - 2 304 439**
**US - A - 2 576 269**
**US - A - 2 998 286**
**US - A - 3 311 426**
**US - A - 3 716 731**

(73) Proprietor: **SKF Industrial Trading & Development Company B.V.**
**Kelvinbaan 16 P.O. Box 50**
**NL-3430 AB Nieuwegein (NL)**

(72) Inventor: **Hoffmann, Alfred**
**Bosuillaan 38**
**Bilthoven (NL)**

(74) Representative: **Merkelbach, B.**
**SKF Engineering & Research Centre B.V. P.O. Box 50 Plettenburgerweg 6A**
**NL-3430 AB Nieuwegein (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Ball bearing for linear motion

The invention concerns a bearing, comprising a housing with a passage for a rectangular shaft-like element, in which housing are situated four ball holders, each of which consists of a plate-like bearing-surface member and a cage member arranged thereon, which between them form at least one oval-shaped race for a circulating row of balls, which race consists of two straight sections running parallel to one other and two curved sections connecting at the ends of these straight sections, said cage member having a slot-like opening such that the balls travelling in at least one of the straight sections of the race project partially through this opening in order to be able to come into contact with the shaft-like element, said balls forming the load absorbing means. A linear bearing of this type is known from US—A—3 353 875.

The object of the invention is to procure a linear bearing for a rectangular shaft-like element which is relatively light, strong and simple in construction and manufacture and above all enables the load carrying balls to circulate smoothly, i.e. without shocks and noiseless.

This object is obtained in that each ball holder has only one oval-shaped race and in the plate-like bearing-surface member of each ball holder is formed a gutter-like circulating bearing surface of substantially constant depth conforming to this oval shape, said ball holders being arranged in the housing in pairs symmetrically disposed on opposite sides of the shaft-like element, with each holder being disposed in a plane extending parallel to said shaft-like element and lying at an acute angle to said side thereof, such that the straight race sections of the balls absorbing the load at one edge of the holders and the other straight race sections at the other edge of the holders run along the edges of two respective rectangular parallelepipeds having different cross-sectional dimensions, the load absorbing balls engaging races formed along the edges of the shaft-like element.

In this way a uniform bearing surface is obtained for the balls, so that the latter are able to circulate without shocks, while it is sufficient to have only four circulating rows of balls.

The oval gutter-like bearing surface is preferably formed by a deformation of the plate-like bearing-surface member, while in the cage member an oval groove which with the gutter-like bearing surface in the bearing-surface member forms the oval race, the slot-like opening being formed in the groove which lies facing the straight section of the bearing surface for the balls absorbing the load.

In addition, the housing may consist of two sections to be joined and the plate-like bearing-surface members may be arranged fixed in the housing sections, for example by pressing.

In this way the housing and the ball holders arranged therein form a whole, so that the same may be delivered as one component.

In addition, the cage member may advantageously be made of a resilient material, for example a plastic, while a common cage member may be present for two adjacent ball holders.

The sections of the housing are preferably connected together by means of hollow rivets. A screw for example may then be screwed into the hollow of the rivets for attaching the housing or for attaching a component to the housing.

The shaft-like element may advantageously be hollow.

The angle of contact, i.e., the angle which, seen in cross-section at each ball holder, a line through the midpoint of a ball absorbing the load and perpendicular to the line of contact of the ball with the shaft-like element makes with the ascending axis of symmetry of the rectangular shaft-like element, is preferably 45°—60°.

It is noted that in the German Design Patent 7508272 is disclosed a ball bearing for linear motion wherein only four balls circulating along an oval race are present and bearing surfaces are formed in the shaft-like element, while the housing consists of two sections to be joined. In this case, however, no separate ball holders are present, since bearing surfaces for the balls are formed in the inner edge of the housing itself, which balls are restrained by cage members, it being necessary at the same time for the shaft-like element to have a double T-shaped profile in cross-section. In this ball bearing, moreover, the lines through the midpoints of the balls absorbing the load and perpendicular to the lines of contact with the shaft-like element run obliquely outwards towards one another.

Yet another type of linear bearing is known from US—A—3 716 731 in which a substantially rectangular shaft is provided with four ball tracks disposed in pairs on opposite sides of the element, each track being engaged by a respective row of balls. The balls are disposed in tracks machined into a complex multi-piece housing.

The invention will now be described in greater detail by means of the example illustrated in the drawing.

Fig. 1 shows an internal view of one of the sections of the housing of a ball bearing according to the invention.

Fig. 2 is a cross-section through the housing of the ball bearing with a shaft-like element situated therein.

Fig. 3 is a cross-section as shown in Fig. 2, but where the housing is provided with a removable wall section, and

Fig. 4 shows a section through a bearing-surface member.

As shown in the drawing, the ball bearing for linear motion according to the invention comprises a housing 1 which consists of two sections 1' and 1" to be joined. At 2 is formed a centering shoulder. The housing sections 1' and 1" are joined to one another by means of the hollow rivets 3.

The housing may be made of any material, such as steel, aluminum, a plastic, or a material obtained by powder metallurgy, since no bearing surfaces are formed in the housing itself.

The bearing surfaces are formed by the plate-like bearing-surface members 4, which are shaped such that an oval-shaped circulating gutter-like bearing surface 5 is formed. The bearing-surface members 4 are arranged fixed in the housing, for example by pressing.

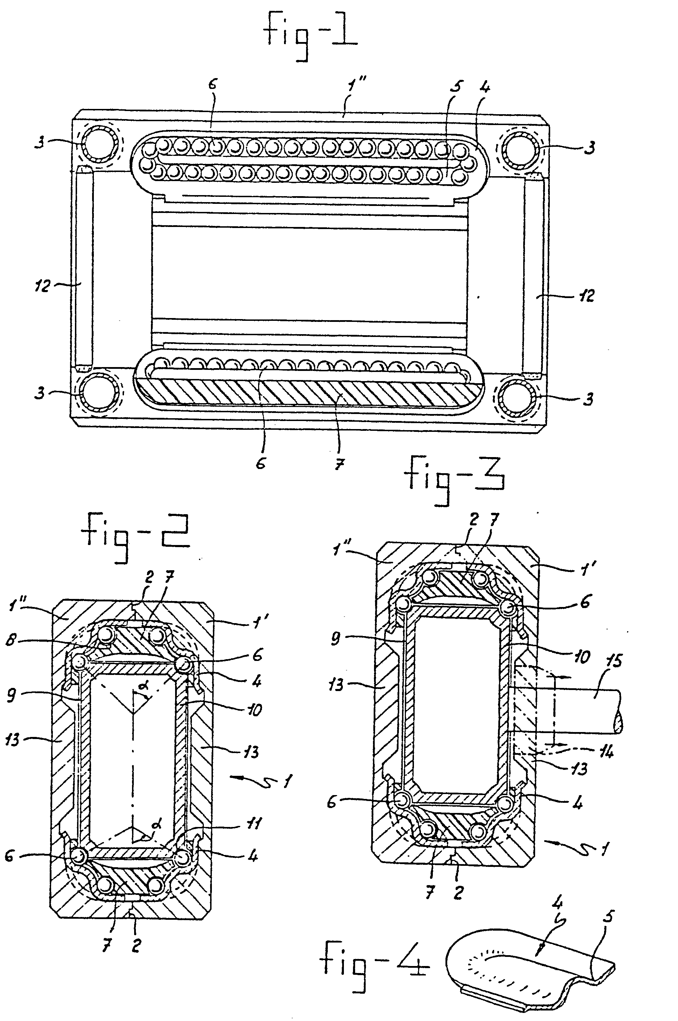

In the gutter-like bearing surface 5 of each bearing-surface member 4 lie balls 6, which are restrained by the cage members 7. In the drawing are shown two cage members 7, although each cage member 7 may alternatively consist of two separate cage members. In the cage members 7 are formed circulating grooves 8, while in one of the straight sections of the groove 8 is arranged a slot-like opening 9, so that the row of balls which are covered by the straight section of the groove 8 project inward from the cage member 7 in order to be able to come into contact with the shaft-like element 10 running through the passage in the housing 1, as well as with the bearing surfaces 11 formed in the corners of the element 10. As shown in Fig. 2, the angles of contact may further be 45°—60°, respectively $\alpha$ and $\alpha'$.

Further arranged in the housing are in addition the sealing means, for example rings, while the housing is stiffened by the thickened wall sections 13.

As shown in Fig. 3, a wall of the housing 1 may be provided by a removable section 14, so that when this section is removed a uniform opening is obtained, through which may project a supporting or fastening member 15, which member is attached to the shaft-like element 10. In this way the shaftlike element 10 may be secured while the housing 1 is movable, which in particular is advantageous for the execution of a wall design. Morover, the shaft-like element is thereby reinforced, for example against bending.

The housing 1 may on the other hand be provided with means of attachment by which it may for example be attached to a support, while the shaft-like element 10 is movable.

**Claims**

1. Linear bearing comprising a housing (1) with a passage for a rectangular shaft-like element (10), in which housing are situated four ball holders, each of which consists of a plate-like bearing-surface member (4) and a cage member (7) arranged thereon, which between them form at least one oval-shaped race for a circulating row of balls, which race consists of two straight sections running parallel to one another and two curved sections connecting at the ends of these straight sections, said cage member having a slot-like opening (9) such that the balls travelling in at least one of the straight sections of the race project partially through this opening in order to be able to come into contact with the shaft-like element, said balls forming the load absorbing means, characterized in that each ball holder has only one oval-shaped race and in the plate-like bearing-surface member (4) of each ball holder is formed a gutter-like circulating bearing surface (5) of substantially constant depth conforming to this oval shape, said ball holders being arranged in the housing (1) in pairs symmetrically disposed on opposite sides of the shaft-like element (10), with each holder being disposed in a plane extending parallel to said shaft-like element (10) and lying at an acute angle to said side thereof, such that the straight race sections of the balls absorbing the load at one edge of the holders and the other straight race sections at the other edge of the holders run along the edges of two respective rectangular parallelepipeds having different cross-sectional dimensions, the load absorbing balls engaging races (11) formed along the edges of the shaft-like element.

2. Ball bearing according to claim 1, characterized in that the oval gutter-like bearing surface (5) is formed by a deformation of the plate-like bearing-surface member (4), while in the cage member (7) is formed an oval groove (8) which with the gutter-like bearing surface (5) in the bearing-surface member (4) forms the oval race, the slot-like opening (9) being formed in the groove (8) which lies facing the straight section of the bearing surface for the balls absorbing the load.

3. Ball bearing according to claim 2, characterized in that the housing (1) consists of two sections to be joined and the plate-like bearing-surface members (5) are arranged fixed in the housing sections (1', 1"), for example by pressing.

4. Ball bearing according to claim 3, characterized in that the housing sections (1', 1") are joined to one another by means of hollow rivets (3).

5. Ball bearing according to claims 2—4, characterized in that the cage member (7) is made of a resilient material, e.g. a plastic.

6. Ball bearing according to claim 5, characterized in that a common cage member (7) is present for two adjacent ball holders (4).

7. Ball bearing according to one of the preceding claims and claim 1, characterized in that the shaft-like element is hollow.

8. Ball bearing according to claim 7, characterized in that according to the sectional view of each ball holder (4) the line through the midpoint of a ball (6) absorbing the load and perpendicular to the line of contact of the ball with the shaft-like element makes an angle of contact with the ascending axis of symmetry of the rectangular shaft-like element (10) which is 45°—60°.

9. Ball bearing according to one of the preceding claims, characterized in that in a side wall of the housing (1) is arranged a slot-like opening.

10. Ball bearing according to claim 9, characterized in that the opening is closed off by a removable section (14) of the side wall.

## Revendications

1. Palier linéaire comprenant un boîtier (1) muni d'un passage pour un élément rectangulaire (10) analogue à un arbre et dans lequel quatre porte-billes sont montés, chacun de ceux-ci étant constitué par un élément (4) analogue à une plaque et faisant office de surface d'appui et un élément (7) faisant office de cage et disposé sur l'élément (4), ces deux éléments formant entre eux, au moins un chemin de roulement, de forme ovale, pour une rangée de billes en circulation, ledit chemin de roulement étant composé de deux sections rectilignes, parallèles entre elles, et de deux sections courbes reliées aux extrémités de ces sections rectilignes, ladite cage étant munie d'une ouverture en forme de fente (9) de telle sorte que les billes qui se déplacent dans au moins l'une des sections rectilignes du chemin de roulement font saillie partiellement à travers cette ouverture afin de pouvoir venir en contact avec l'élément analogue à un arbre, lesdites billes formant un dispositif d'absorption de charge, caractérisé en ce que chaque portebilles ne comporte qu'un seul chemin de roulement de forme ovale et que dans l'élément (4) analogue à une plaque et faisant office de surface d'appui de chaque porte-billes, est formé une surface d'appui et de circulation (5) analogue à une gouttière, de profondeur essentiellement constante et suivant cette forme ovale, lesdits porte-billes étant disposés dans le boîtier (1) par paires positionnées symétriquement de chaque côté de l'élément (10) analogue à un arbre, chaque porte-billes étant disposé dans un plan s'étendant parallèlement audit élément (10) analogue à un arbre et faisant un angle aigü avec le côté de celui-ci de façon que les sections de chemin de roulement rectilignes des billes absorbant la charge sur un des bords des portebilles et les autres sections de chemin de roulement rectilignes de l'autre bord des porte-billes s'étendent le long des bords de deux parallélépipèdes rectangles respectifs ayant des dimensions de sections droites différentes, les billes absorbant la charge portant contre les chemins de roulement (11) formés le long des bords de l'élément analogue à un arbre.

2. Palier à billes selon la revendication 1, caractérisé en ce que la surface d'appui en forme de gouttière ovale (5) est réalisée par déformation de l'élément (4) analogue à une plaque (4) et formant une surface d'appui tandis que dans la cage (7) est formée une rainure ovale (8) avec laquelle la surface d'appui (5), analogue à une gouttière, de l'élément (4), formant surface d'appui, constitue le chemin de roulement ovale; une ouverture analogue à une fente (9) étant formée dans la rainure (8) qui se trouve en face de la section rectiligne de la surface d'appui pour les billes absorbant la charge.

3. Palier à billes selon la revendication 2, caractérisé en ce que le boîtier (1) est composé de deux parties à assembler et que les éléments (5) analogues à des plaques sont montés de façon fixe dans les parties (1' et 1") du boîtier, par exemple à la presse.

4. Palier à billes selon la revendication 3, caractérisé en ce que les parties du boîtier (1' et 1") sont assemblées l'une à l'autre au moyen de rivets creaux (3).

5. Palier à billes selon les revendications 2 à 4, caractérisé en ce que la cage (7) est réalisée en une matière élastique, par exemple une matière plastique.

6. Palier à billes selon la revendication 5, caractérisé en ce que la cage (7) est commune à deux porte-billes adjacents (4).

7. Palier à billes selon l'une des revendications précédentes et la revendication 1, caractérisé en ce que l'élément analogue à un arbre est creux.

8. Palier à bille selon la revendication 7, caractérisé en ce que suivant la vue en coupe de chaque porte-billes (4), la droite passant par le centre d'une bille (6) absorbant la charge et perpendiculaire à la ligne de contact de la bille et de l'élément analogue à un arbre forme avec l'axe de symétrie ascendant de l'élément rectangulaire analogue à un arbre (10) un angle de contact de 45 à 60°.

9. Palier à billes selon l'une quelconque des précédentes revendications, caractérisé en ce qu'une overture analogue à une fente est ménagée dans la paroi latérale du boîtier (1).

10. Palier à billes selon la revendication 9, caractérisé en ce que l'ouverture est obturée par une partie amovible (14) de la paroi latérale.

## Patentansprüche

1. Kugellager für Längsbewegungen mit einem Gehäuse (1) mit Durchlaß für ein stangenförmiges, im Querschnitt rechteckiges Element (10) sowie mit vier im Gehäuse angeordneten Kugelhaltern, deren jeder aus einem plattenförmigen Lagerteil (4) und einem darauf angeordneten Käfigteil (7) besteht, die zwischen sich wenigstens eine ovale Laufbahn für eine umlaufende Kugelreihe bilden, wobei die Laufbahn aus zwei geraden, parallel zu einander verlaufenden und zwei deren Enden verbindenden gekrümmten Abschnitten besteht und das Käfigteil derart mit einer schlitzförmigen Öffnung (9) versehen ist, daß die Kugeln bei ihrem Lauf wenigstens längs des einen geraden Laufbahnabschnitts teilweise durch diese Öffnung hindurch vorragen, um an dem stangenförmigen Element zur Anlage zu kommen, wobei diese Kugeln das die Last aufnehmende Mittel darstellen, dadurch gekennzeichnet, daß jeder Kugelhalter nur eine ovale Laufbahn hat und in dem plattenförmigen Lagerteil (4) jedes Kugelhalters eine der ovalen Form entsprechende rinnenförmige, umlaufende Lagerfläche (5) von im wesentlichen konstanter Tiefe ausgebildet ist, die Kugelhalter paarweise symmetrisch im Gehäuse auf entgegengesetzten Seiten des stangenförmigen Elements (10) angeordnet sind und jeder Kugelhalter in einer sich parallel zu dem stabförmigen Element erstreckenden Ebene angeordnet ist, die unter einem spitzen Winkel zu dessen jeweiliger Seite liegt, so daß die geraden Laufbahnabschnitte mit den die Last aufnehmenden Kugeln an der einen Kante des Kugelhalters und die anderen geraden Laufbahnabschnitte an der anderen Kante des Kugelhalters entlang der Kanten von zwei Quadern unterschiedlichen Querschnitts verlaufen, wobei die Last aufnehmenden Kugeln mit längs der Kanten des stangenförmigen Elements ausgebildeten Laufbahnen (11) in Eingriff sind.

2. Kugellager nach Anspruch 1, dadurch gekennzeichnet, daß die ovale, rinnenförmige Lagerfläche (5) durch Verformung des plattenförmigen Lagerteils (4) ausgebildet ist, während in dem Käfigteil (7) eine ovale Nut (8) ausgebildet ist, die zusammen mit der rinnenförmigen Lagerfläche (5) im Lagerteil (4) die ovale Laufbahn bildet, wobei die schlitzförmige Öffnung (9) in dem Abschnitt der Nut (8) ausgebildet ist, welcher dem geraden Lagerflächenabschnitt für die die Last aufnehmenden Kugeln gegenüberliegt.

3. Kugellager nach Anspruch 2, dadurch gekennzeichnet, daß das Gehäuse (1) aus zwei miteinander zu verbindenden Teilen besteht und die plattenförmigen Lagerteile (5), z.B. durch Einpressen, fest in den Gehäuseteilen (1', 1") angebracht sind.

4. Kugellanger nach Anspruch 3, dadurch gekennzeichnet, daß die Gehäuseteile (1', 1") mittels Hohlnieten (3) miteinander verbunden sind.

5. Kugellager nach den Ansprüchen 2 bis 4, dadurch gekennzeichnet, daß das Käfigteil (7) aus einem elastisch nachgiebigen Material, z.B. einem Kunststoff, besteht.

6. Kugellager nach Anspruch 5, dadurch gekennzeichnet, daß für zwei benachbarte Kugelhalter (4) ein gemeinsames Käfigteil (7) vorhanden ist.

7. Kugellager nach einem der vorhergehenden Ansprüche und Anspruch 1, dadurch gekennzeichnet, daß das stangenförmige Element hohl ist.

8. Kugellager nach Anspruch 7, dadurch gekennzeichnet, daß bei jedem Kugelhalter (4) im Querschnitt die Senkrechte auf der Berührungslinie einer Last aufnehmenden Kugel (6) mit dem stangenförmigen Element durch den Mittelpunkt der Kugel mit der aufsteigenden Symmetrieachse des im Querschnitt rechteckigen strangenförmigen Elements (10) einen Winkel von 45—60 Grad bildet.

9. Kugellager nach einem der vorhergehenden Ansprüche, dadurch gekennzeichnet, daß in einer Seitenwand des Gehäuses (1) eine schlitzförmige Öffnung angebracht ist.

10. Kugellager nach Anspruch 9, dadurch gekennzeichnet, daß die Öffnung durch ein abnehmbares Teil (14) der Seitenwand abgeschlossen ist.

0 014 275

fig-1

fig-2

fig-3

fig-4